# EUROPEAN PATENT APPLICATION

(11) **EP 4 190 148 A1**
(43) Date of publication of application: **07.06.2023**
(21) Application number: 22210988.6
(22) Date of filing: 02.12.2022
(51) Int. Cl.: A01K 61/13, A01K 61/95

(54) **MULTIPURPOSE OR MULTIUSE VESSEL**

(30) Priority: 03.12.2021 NO 20211462
(71) Applicant: Hofseth International AS, 6003 Ålesund (NO)
(72) Inventor: HOFSETH, Roger, N-6057 ELLINGSØY (NO)
(74) Representative: Onsagers AS

(57) **Abstract**

The present invention relates to a multifunctional or multiuse vessel for use in the fisheries and aquaculture industry, which multifunctional or multiuse vessel comprises at least one hull and a working deck, wherein the multifunctional or multiuse vessel further comprises a plurality of closed compartments, a pumping system for pumping fish from a volume containing liquid and fish, a sorting unit for fish arranged in one of the plurality of closed compartments, the closed compartment being located a certain height above the working deck, where the pumping system is connected to the sorting unit.

## Description

The present invention relates to a multifunctional or multipurpose vessel for transporting and/or storing fish or other aquatic organisms.

In loading, unloading, transport and treatment of, for instance, farmed fish to or from a net cage and/or slaughterhouse, conventional so-called well boats are used. A well boat may be a very advanced and expensive vessel that is equipped with a plurality of "systems" in addition to the conventional well or basin that should transport and hold farmed fish or other aquatic organisms. The most common "systems" a well boat may be equipped with is/are: a loading and unloading system used to transfer fish from a net cage to the well boat and from the well boat to a slaughterhouse, a cleaning system used for cleaning of well and pipes, an oxygen supply system used to supply oxygen to fish or other aquatic organisms during transport and/or treatment, a penetration system, a fish counter system, different lifting systems with cranes or the like, as well as living quarter for crew on board the well boat.

A conventional well boat often services a number of fish farms and must run in shuttle traffic between different net cages of the fish farms and slaughterhouses. To avoid the spread of various types of fish diseases or parasites, for instance, Infectious Salmon Anaemia (ILA), Pancreas Disease (PD), sea lice, etc., there are requirements for the cleaning of equipment and hull of the well boat and requirements for observing quarantine periods and/or procedures. The costs of operating a well boat are high and efficiency is relatively low.

In recent years there has been a considerable focus on the negative consequences resulting from fish breeding and well boat transport of live fish from hatchery to net cage, between net cages, or from net cage to slaughterhouse. The negative consequences are especially associated with fish escape, sea lice, spread of disease and, not least, the welfare and quality of the fish.

Despite a strong focus on approaches to the problems relating to transport of live fish and stricter regulations, there are still major challenges. Loading and unloading of live fish to and from a well boat, for example, is an operation involving a high risk of escape, either due to damage/injury to a cage by the well boat when anchoring at the edge of the cage, or through technical or human error in the loading and unloading system during operation.

Escape of fish not only causes considerable financial loss for the breeder, but it also constitutes a major environmental problem. In the extreme consequence, the fish can mingle with wild fish and ruin its genetic diversity. In addition, escaped fish may be infected with various types of parasites and diseases that can in this way be transferred and spread to wild fish strains in the area and to neighboring fish farms. Hence there is a need for solutions that will prevent escape.

Today there are few solutions and measures for preventing infection once disease has been established, aside from slaughtering. A closed system thus could conceivably function as a quarantine facility, wherein medicinal measures can be undertaken without affecting the surroundings. It is also a paradox that today the same well boat that transports healthy fish is used to transport sick fish-a practice which quite clearly constitutes an infection risk. There are, however, special requirements for quarantine periods and standards for washing and disinfecting, but these impose unnecessarily high costs on the breeder as a result of the downtime involved.

The well boats have changed in size, and newer and more sophisticated equipment is continuously being employed. This includes, for instance, equipment and methods for loading and unloading of fish, for counting and grading of fish, and for monitoring and adjusting the water quality during the transport of the fish. Furthermore, well boats are used in the aquaculture industry for several types of services, and there has been little specialization of the boats. The well boats are used both for transport of fish which are to be slaughtered, fish to be graded and smolt. Although some boats or shipping companies have agreements with large regional actors, so that they mainly operate in certain regional areas, many vessels perform work outside predefined areas. Several shipping companies have had vessels operating outside Norway for all or part of the season.

The wellboats also carry out, in addition to transport assignments only, other important assignments for the aquaculture industry. Grading of and/or relocation of edible fish is an important part of economical production at many fish farm sites. Many fish farms also use a wellboat, for example, for treatment of salmon lice, where such a treatment can also be done in connection with grading of and/or moving of fish between different locations. The situation with increasing incidence of lice with impaired sensitivity for several of the most important drugs has led to the need for alternative treatment methods. Bathing of fish with hydrogen peroxide is one such option, and for many fish farms, such treatment depends on the use of a well boat. Lice and other parasites can also be removed aboard well boats by flushing or swimming in tempered freshwater, then by means of separate devices mounted on the deck of the wellboat.

Well boats can also be used for other types of assignments such as transport of dead fish, stunned fish or operational assistance where sites are in urgent need for boats with high load capacity.

Wellboats can also be used for the treatment of fish for various diseases, such as sea lice, amoeba gill disease (AGD) etc., where the wellboat will then include devices and/or drug delivery system, freshwater production, water purification etc.

In connection with the compression of fish during such wellboat operations, the fish are exposed to excessive stress, where this can result in reduced fish welfare and possibly fish death.

The fish can be subjected to stress during such wellboat operations, especially through the compression of the fish in the net cage. The compression or pumping of fish may cause wounds and fin damages on the fish, effusion of blood on fish and in some cases bleeding gills and sores. The stress level and the damages can further lead to reduced welfare and reduced product quality (i.e. gaping, shortened shelf life). The main cause of reduced welfare is believed to be caused by compression, with high density and lack of oxygen.

Norwegian patent application 20131346 relates to a vessel equipped with a self-flowing tank with integrated water purification system, where the tank can be lifted out of the water and transported by a special vessel. Such a tank with a tank can be used as a barge to replace a holding pen, delousing barge, quarantine barge or net cage for fish and other aquatic organisms.

NO 310391 B1 relates to a method and device for moving marine organisms, in particular living fish, where a curved tube is mounted between a pen and a cargo space to which the transfer is to take place. By pressure change, a real or virtual level deviation is established between the sea level in the pen and the level of the cargo space, so that a flow of water is formed through the pipe. Using a water pump ensures that the amount of water in the cargo area is kept constant within certain limits.

NO 314611 B1 relates to a pump arrangement for living fish, comprising a pressure tank with an inlet pipe having an inlet valve providing for inlet of water and fish through the inlet pipe, for moving fish and water from a basin, wherein the pressure tank is provided with a first outlet pipe for leading fish and water to a drainage grid with a first outlet valve for closing and opening the first outlet pipe. The pressurised tank is provided with a second outlet pipe with a second outlet valve and a pump for establishing underpressure in the pressure tank so that water and fish can run in through the inlet, that the drainage grid is provided with a return path pipe with a return path pipe valve, whereby the return path pipe leads back to the pressure tank so as to form a circuit which can be open at the drainage grid. The return path pipe is provided with a return pump for returning water from the drainage grid to the pressure tank, so that the return pump can pressurize the water and circulate the water and the fish out from the pressure tank and thereby transfer the fish to the drainage grid.

There is thus a need for alternatives to today's well boats, or at least supplementary solutions for such well boats.

An object according to the present invention is to remedy at least one of the above-mentioned disadvantages or problems.

Another object according to the present invention is to provide a multifunctional or multiuse vessel which will better ensure fish welfare, reduce stress on the fish, reduce mortality during loading and handling of the fish and which may improve the fish quality.

These objects are achieved according to the present invention with a multifunctional or multiuse vessel as defined in the independent claim 1. Further embodiments of the invention are defined in the dependent claims.

The present invention relates to a multifunctional or multiuse vessel for use in the fisheries and aquaculture industry, where the multifunctional or multiuse vessel comprises at least one hull and a working deck, wherein the multifunctional or multiuse vessel further comprises a plurality of closed compartments, a pumping system for pumping fish from a volume containing liquid and fish arrange on board the vessel, a sorting unit for fish arranged in a closed compartment located a certain height above the working deck, the pumping system being connected to the sorting unit.

The multifunctional or multiuse vessel may in one exemplary embodiment also comprise one or more of the following systems: water degassing system, oxygenation plant or system for closed transport of fish, fresh water treatment (light and Amoebic Gill Disease (AGD)), filtering system for separating lice during delousing), UV treatment system(s), oxygen level monitoring system, ozone plant for disinfection of compartments, cargo holds, pipe systems, water in cargo holds or the like. Each system may then be arranged in its own, separate and closed compartment of the plurality of closed compartments.

By arranging the plurality of closed compartments at certain heights above the working deck, one may use the gravity for both sorting, distribution and transport or transfer of the fish to another location, for instance another vessel, a net cage or the like. The multifunctional or multiuse vessel according to the present invention may also be used for the transport of the fish, for instance from a fish farm and to a slaughter plant onshore.

The other vessel could, for instance be a well boat or the like.

The pumping system may in one embodiment according to the present invention comprise one or more pumps connected to one or more driving devices, a flexible suction line and a pipeline being connected to each pump, the pumping system being configured in such a way that the flexible suction line of each pump may be arranged between the corresponding pump and a volume containing liquid and fish which are to be pumped and transported, and where the a pipeline may be arranged between the corresponding pump and the vessel.

The volume containing liquid and fish may, for instance, be a net cage in a fish farm comprising a number of net cages, a trawl or the like, from which the fish are to be pumped from and to the multifunctional or multiuse vessel. However, it could also be envisaged that the volume containing liquid and fish may be another vessel, for instance a well boat or the like. Furthermore, the volume containing the liquid and fish could also be one or more tanks arranged on board the multifunctional or multiuse vessel.

Through the pumping system the fish may be pumped from a net cage in a fish farm and on board the multifunctional or multiuse vessel, where the fish is sent to the sorting unit in order to screen or grade the fish according to desired sizes of the fish.

When the fish are pumped on board the multifunctional or multiuse vessel, the fish are led to a straining unit, such that fish and water are separated. The straining unit may be arranged in a separate, closed compartment of the plurality of closed compartments, where the straining unit is connected to the sorting unit.

According to one aspect, the closed compartment in which the straining unit is located in may be arranged above the compartment in which the sorting unit is arranged, such that the gravity may be used to move the fish from the straining unit and to the sorting unit.

According to one embodiment the sorting unit may comprise three branches in order to be able to sort out three different sizes of fish, where the fish may be sorted as small fish (fish of first order), medium-sized fish (fish of second order) and large fish (fish of third order). Each branch is furthermore connected to a transport pipe, such that the fish, when sorted out into one of the three orders of size, may be transported further away from the sorting unit.

The large fish, i.e. fish of third order are usually fish that are to be slaughtered.

The smallest fish, i.e. fish of first order, which may typically be fish weighing less than 2 kg, may then be sent to grinding or milling system, where the ground fish in turn may be used as raw material for various products.

The medium-sized fish, i.e. fish of second order, which may typically be fish weighing between 2 and 4 kg, may be sent back to the same net cage it was pumped up from, or to another net cage.

The largest fish, i.e. fish of third order, which may typically be fish weighing over 4 kg, will be sent to the system for anesthesia, cutting and out-bleeding.

Furthermore, the closed compartment in which the sorting unit is arranged in, may be located at such a height above the working deck that gravity can be used to transport the sorted fish further from the sorting unit.

The transport pipe for the smallest fish may be connected to a grinding system, the transport pipe for the medium-sized fish may be connected to a volume containing liquid and fish, where the volume containing liquid or fish may be the same net cage from which the fish were pumped on board the vessel, the volume may be another net cage in the fish farm, or the volume may be one or more fish tanks on board the multipurpose or multiuse vessel. The medium-sized fish may be returned to the same or another net cage so that the fish can grow further to optimal slaughter weight before the fish are slaughtered.

The transport pipe for the largest fish may be connected to a system for anesthesia, cutting and out-bleeding.

According to one embodiment, the pipeline arranged between the pump and the sorting unit may be connected to a fish counting system (fish counter), such that fish pumped on board the multifunctional or multiuse vessel may be counted.

According to one aspect, the pipeline arranged between the pump and the sorting unit may also be connected to a system for delousing of the fish, such that the fish may be treated for salmon lice and/or other diseases.

The multifunctional or multiuse vessel according to the present invention may also comprise an oxygenation system.

In one embodiment the oxygenation system may comprise one or more air compressors, one or more oxygen generators, one or more control valves, water pumps and ejectors. The system for oxygenation may be arranged in a separate, closed compartment.

According to one aspect, the grinding system, system for anesthesia, cutting and out-bleeding, system for delousing of fish unit and fish counting system may each be arranged in a separate, closed compartment than the sorting unit. One or more of these separate, closed compartments may be arranged below the compartment comprising the sorting unit.

According to one aspect, the multifunctional or multiuse vessel may also be provided with a plurality of lifting devices, where the lifting devices may be used to perform different operations, for instance to handle the flexible suction pipe of the pumping system when the fish are to be pumped from the net cage and on board the multifunctional or multiuse vessel, when the medium-sized fish is to be returned back to the net cage through the transport pipeline or the like.

The lifting devices may then be provided both at bow and aft of the vessel, thereby providing an area at a center of the multifunctional or multiuse vessel that is not defined as a lifting area. This area may be used for placement of sensitive equipment, such as hydrogen tanks or the like.

In one embodiment the vessel may be provided with two lifting devices aft and one lifting device at bow.

The lifting devices may be cranes or the like.

The multifunctional or multiuse vessel according to the present invention is therefore provided with technology and designer solutions that will ensure fish welfare, infection protection, hygiene, environment and quality. The multifunctional or multiuse vessel comprises automated lines for anesthesia, cutting and out-bleeding of fish, after which the fish are fed directly to and stored in pre-cooled Refrigerated Sea Water (RSW) tanks. The vessel may also be used for other treatment of fish, such as lice treatment and/or as working boats, as the multipurpose or multiuse vessel may be equipped with equipment for these processes.

The multipurpose or multiuse vessel according to the present invention may be used, for instance, when ready-to-slaughter from a net cage, a fish farm or the like are to be taken out, when the multipurpose or multiuse vessel may be used to sort out the ready-to-slaughter fish. The multipurpose or multiuse vessel may then transfer the ready-to-slaughter fish to another vessel in order to transport the fish to a land-based slaughter plant, or the multipurpose or multiuse vessel may itself be used for slaughtering and processing of the ready-to-slaughter fish, alternatively for transporting the ready-to-slaughter fish to the land-based slaughter plant.

The multipurpose or multiuse vessel according to the present invention may also be used when fish in a net cage, a fish farm or the like are, for instance, to be treated for salmon lice, where the pumping system is used to transfer the fish from the net cage to the one or more tanks on board the multipurpose or multiuse vessel. The system for delousing of the fish may thereafter be used to treat the fish for salmon lice and/or other diseases. When the fish have been treated, one or more lice counting units may be used to check or control if the fish have been adequately treated. If the fish have been properly treated, the fish may be returned to the net cage. Otherwise, the fish will undergo a new treatment. The one or more tanks on board the multipurpose or multiuse vessel will be cleaned after the treatment is carried out in order to prevent spreading of salmon lice and/or diseases.

Other advantages and features of the invention will become apparent from the following detailed description, the accompanying drawings and the following claims, where
Figure 1 is a schematic figure of a multifunctional or multiuse vessel according to the present invention, seen in a perspective view,
Figure 2 shows how the multifunctional or multiuse vessel according to figure 1 is used to transfer from a fish farm to the multifunctional or multiuse vessel,
Figure 3 shows a first embodiment of a pumping arrangement according to the present invention and
Figure 4 shows an alternative embodiment of the pumping arrangement according to figure 3.

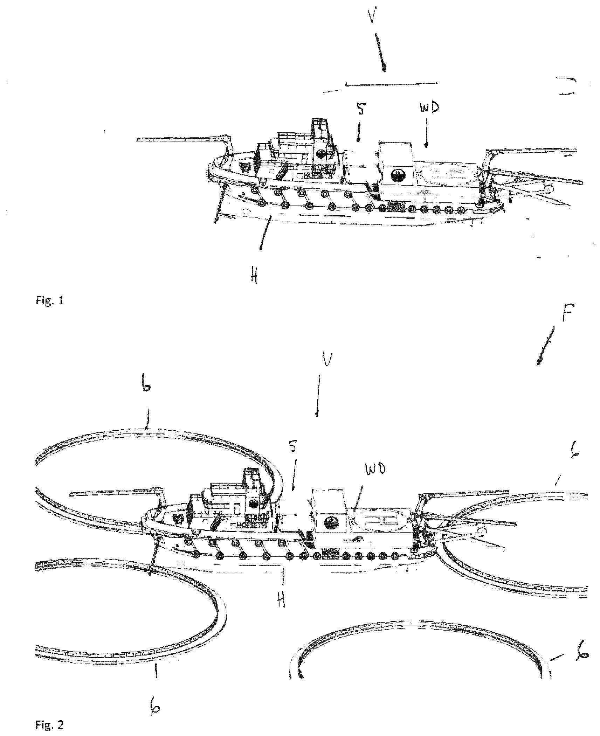

Figure 1 shows in a schematic way a multifunctional or multiuse vessel V according to the present invention, , where the multifunctional or multiuse vessel V comprises at least one hull H and a working deck WD, where the multifunctional or multiuse vessel V further comprises a plurality of closed compartments, a pumping system for pumping fish from a volume containing liquid and fish, a sorting unit 5 for fish arranged in one of the closed compartments and where the pumping system is connected to the sorting unit 5.

The multipurpose or multiuse vessel V may also comprise one or more tanks arranged below the working deck WD, in which one or more tanks the fish may be temporarily stored during the transport or treatment of the fish, a fish counting system, system for delousing of fish, system for anesthesia, cutting and out-bleeding of fish and one or more systems for processing of the fish.

The pumping system PS, which in one embodiment may be connected to a sorting unit 5, a straining unit 7 or the like, comprises a pump 2 connected to a driving device (not shown), a flexible suction line 1 arranged between the pump 2 and the net cage 6 from which the fish is to be transferred to the vessel V and a pipeline 3 arranged between the pump 2 and the sorting unit 5, straining unit 7 or the like.

The sorting unit 5 is arranged in one of the plurality of closed compartments on board the multipurpose or multiuse vessel V, where the closed compartment with the sorting unit 5 is located a certain height above the working deck WD.

The multipurpose or multiuse vessel V may in an alternative embodiment also comprise a straining unit 7, where the straining unit will separate fish and water. The straining unit 7 is arranged in a separate, closed compartment and is located above the closed compartment in which the sorting unit 5 is arranged. The straining unit 7 is connected to the sorting unit 5 through a pipe, channel, or the like.

According to one aspect, the closed compartment in which the straining unit 7 is located in may be arranged above the compartment in which the sorting unit 5 is arranged, such that the gravity may be used to move the fish from the straining unit 7 and to the sorting unit 5.

The sorting unit 5 is arranged in a closed compartment located a certain height above the working deck WD. The closed compartment comprising the sorting unit 5 is placed at such a height above the working deck WD that the gravity can be used to transport the sorted fish further from the sorting unit 5.

According to one embodiment the sorting unit 5 comprises three branches that will be able to separate fish of different size from each other, where the fish, for instance, may be sorted as small fish (fish of first order), medium-sized fish (fish of second order) and large fish (fish of third order). Each branch is then connected to a transport pipe, such that fish, after being sorted out into one of the three orders of size, may be transported further from the sorting unit 5.

The smallest fish, i.e. fish of first order, which may typically be fish weighing less than 2 kg, may then be sent to a grinding or milling system, where the ground fish in turn may be used as raw material for various products.

The medium-sized fish, i.e. fish of second order, which may typically be fish weighing between 2 and 4 kg, may be sent back to the same net cage 6 it was pumped up from, or to another net cage, and the largest fish, i.e. fish of third order, which may typically be fish weighing over 4 kg, will be sent for slaughter. Before the largest fish are slaughtered, the fish are sent to the system for anesthesia, cutting and out-bleeding, whereafter the fish are processed further on board the multipurpose or multiuse vessel V.

The transport pipe for the smallest fish are connected to a grinding or milling system, the transport pipe for the medium-sized fish is connected to a volume containing liquid and fish, where the volume containing liquid or fish may be the same net cage 6 form which the fish were pumped on board the multipurpose or multiuse vessel V, or the volume containing liquid or fish may be another net cage 6 in the fish farm. The medium-sized fish are returned to the same or another net cage 6 so that the fish can grow further to optimal slaughter weight before it is slaughtered.

Figure 2 shows how the multipurpose or multiuse vessel V, for instance, can be used to sort out the fish in a fish farm F, where the fish farm F comprises a number of net cages 6. The multipurpose or multiuse vessel V has arrived the fish farm F and is moored to the fish farm F or one or more net cages 6 in appropriate ways.

When the fish are pumped on board the multipurpose or multiuse vessel V through the pumping system PS, the fish are led to the sorting unit 5, where the sorting unit 5 is arranged in a closed compartment located a certain height over the working deck WD, such that gravity may be used to move the fish from the sorting unit 5.

The smallest fish are then sent to the grinding or milling system, whereafter the ground fish are used as raw material for various products. The medium sized fish are sent back to the neg cage 6 the fish were pumped up from, and the largest fish, fish ready-to-slaughter are sent to the system for anesthesia, cutting and out-bleeding, whereafter the fish are processed further on board the multipurpose or multiuse vessel V, or transported to a slaughter plant onshore.

The sorted fish may also be counted through use of the fish counter system, such that the operator of the fish farm will know how many fish are sent to grinding or milling, how many fish are returned to the fish farm and how many fish are slaughtered/sent to a slaughter plant.

The multipurpose or multiuse vessel V may also be used when fish in a net cage 6, a fish farm F or the like are, for instance, to be treated for salmon lice, where the pumping system PS is used to transfer the fish from the net cage 6 to the one or more tanks on board the multipurpose or multiuse vessel V. The system for delousing of the fish may thereafter be used to treat the fish for salmon lice and/or other diseases. When the fish have been treated, one or more lice counting units may be used to check or control if the fish have been adequately treated. If the fish have been properly treated, the fish may be returned to the net cage 6. Otherwise, the fish will undergo a new treatment. The one or more tanks on board the multipurpose or multiuse vessel V will be cleaned after the treatment is carried out in order to prevent spreading of salmon lice and/or diseases.

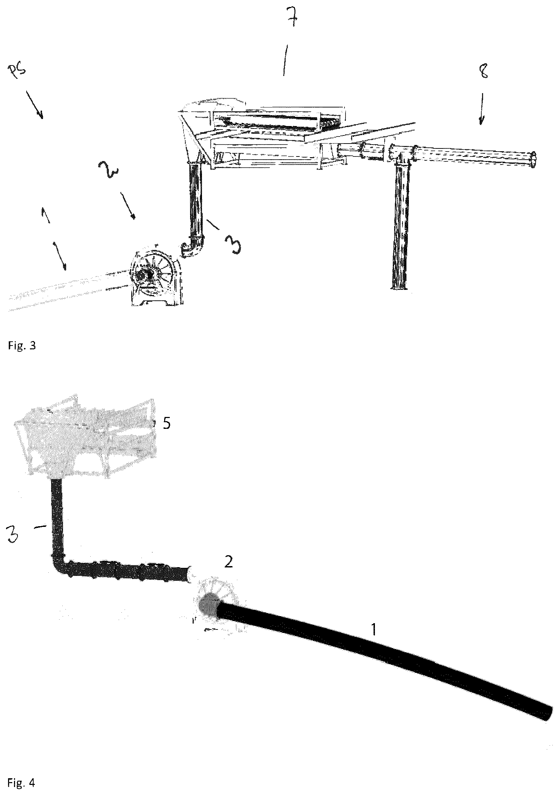

Figures 3 and 4 show the pumping system PS in greater detail, where figure 3 shows how the pumping system PS is connected to the straining unit 7, whereafter the straining unit 7 is connected to the sorting unit 5 through a pipe 8, while figure 4 shows how the pumping system PS is connected directly to the sorting unit 5.

The invention is now explained with several non-limiting exemplary embodiments. A person of skill in the art will appreciate that a variety of variations and modifications can be carried out of the multifunctional or multiuse vessel as described within the scope of the invention as defined in the appended claims.

## Claims

1. A multifunctional or multiuse vessel (V) for use in the fisheries and aquaculture industry, which multifunctional or multiuse vessel (V) comprises at least one hull and a working deck, **characterized in that** the multifunctional or multiuse vessel (V) further comprises a plurality of closed compartments, a pumping system for pumping fish from a volume containing liquid and fish, a sorting unit (5) for fish arranged in one of the closed compartments, the compartment being located a certain height above the working deck, where the pumping system being connected to the sorting unit (5).

2. The multifunctional or multiuse vessel (V) according to claim 1, **characterized in that** the pumping system comprises a pump (2) connected to a driving device, a flexible suction line (1) arranged between the pump (2) and the volume containing liquid and fish to be pumped and transported, and a pipeline arranged between the pump (2) and the sorting unit (5).

3. The multifunctional or multiuse vessel (V) according to claim 1 or 2, **characterized in that** the sorting unit (5) comprises a plurality of branches for sorting of fish by size, each branch further being connected to a transport pipe.

4. The multifunctional or multiuse vessel (V) according to claim 3, **characterized in that** one branch and transport pipe for fish of first order is connected to a grinding or milling unit, another branch and transport pipe for fish of second order is connected to a volume containing liquid and fish, and yet another branch and transport pipe for fish of third order is connected to a unit for anesthesia, cutting and out-bleeding, wherein the fish of second order is larger than fish of first order, and the fish of third order is larger than the fish of second order.

5. The multifunctional or multiuse vessel (V) according to any of the preceding claims 2-4, **characterized in that** the pipeline arranged between the pump (2) and the sorting unit (5) is connected to a fish counter unit.

6. The multifunctional or multiuse vessel (V) according to any of the preceding claims 2 to 5, **characterized in that** the pipeline arranged between the pump (2) and the sorting unit (5) is connected to a delousing unit.

7. The multifunctional or multiuse vessel (V) according to any of the preceding claims, **characterized in that** the vessel comprises an oxygenation system.

8. The multifunctional or multiuse vessel (V) according to claim 7, **characterized in that** the oxygenation system comprises one or more air compressors, one or more oxygen generators, one or more control valves, water pumps and/or ejectors.

9. The multifunctional or multiuse vessel (V) according to any one of the preceding claims 3 to 8, **characterized in that** the grinding or milling unit, bleeding unit, delousing unit and fish counter unit are arranged in a compartment below the compartment comprising the sorting unit (5).

10. The multifunctional or multiuse vessel (V) according to any one of the preceding claims, **characterized in that** each of a bow and stern of the vessel is provided with at least one lifting device.

11. The multifunctional or multiuse vessel (V) according to claim 10, **characterized in that** the lifting device is a crane or the like.

12. The multifunctional or multiuse vessel (V) according to any of the preceding claims, **characterized in that** the vessel further comprises a straining unit (7).
